# EUROPEAN PATENT SPECIFICATION

(11) **EP 2 405 109 B1**
(45) Date of publication and mention of the grant of the patent: **17.08.2016**
(21) Application number: 11172124.7
(22) Date of filing: 30.06.2011
(51) Int. Cl.: F01N 3/28, F01N 13/08, F01N 3/20, B01F 5/04, B01F 5/06, B01F 3/04, F01N 3/08, F01N 3/10, F01N 3/021

(54) **Exhaust purification system**
Abgasreinigungssystem
Système de purification d'échappement

(30) Priority: 08.07.2010 JP 2010155695
(43) Date of publication of application: 11.01.2012
(73) Proprietor: Mitsubishi Jidosha Kogyo Kabushiki Kaisha, Tokyo 108-8410 (JP)
(72) Inventor: Kojima, Mitsutaka, JP, 108-8410 (JP); Tanaka, Toshimasa, Tokyo, 108-8410 (JP); Saito, Takahiro, Tokyo, 108-8410 (JP); Tashiro, Keisuke, Tokyo, 108-8410 (JP); Fujita, Takehisa, Tokyo, 108-8410 (JP)
(74) Representative: Vossius & Partner Patentanwälte Rechtsanwälte mbB

(56) References cited:
- EP-A2- 2 075 428
- DE-A1-102008 041 486
- DE-A1-102008 052 757
- DE-U1-202008 001 547
- US-A1- 2009 158 717

## Description

### BACKGROUND OF THE INVENTION

### Field of the Invention

The present invention relates to an exhaust purification system that is configured to spray an additive such as fuel into an exhaust pipe to supply the additive to a catalyst.

### Description of the Related Art

For purification of exhaust gas of a diesel engine, an exhaust purification system is used, which is combined with a storage NOx catalyst, a selective reduction NOx catalyst, a diesel particulate filter or the like to prevent the NOx (nitrogen oxide) and PM (particulate matter) contained in the exhaust gas of the diesel engine from being released into the atmosphere.

Such an exhaust purification system has a configuration in which a catalyst such as an oxidation catalyst, which is called a pre-catalyst, is disposed in an exhaust pipe that discharges outside the exhaust gas discharged from the engine, and an injection valve that sprays an additive (fuel, for example) required for the reaction of the catalyst is located upstream of the catalyst.

A possibility with the exhaust purification system is that soot contained in exhaust gas adheres to a nozzle hole of the injection valve or that the temperature of the injection valve is increased over a permissible level due to exhaust heat.

To resolve these possibilities, a technology has been suggested in which a projecting portion is formed to outwardly extend from an exhaust pipe, and an injection valve for spraying an additive is provided in the projecting portion so that an exhaust flow does not directly hit the injection valve, thereby preventing a temperature increase in the injection valve, see for example JP2009-114910A (Patent Document 1) or US2009/158717A1 or DE 10 2008 052757 A1.

In the exhaust purification systems, disclosed in these patent documents, however, exhaust gas enters inside the projecting portion, and soot contained in the exhaust gas tends to accumulate in the projecting portion. If the soot accumulates to a large amount within the projecting portion, an additive spray from the injection valve is interrupted by the soot, and is not fully mixed with the exhaust gas.

### SUMMARY OF THE INVENTION

It is an object of the present invention to provide an exhaust purification system that prevents exhaust-gas retention and is thus capable of preventing soot accumulation at a position where an additive is injected into an exhaust pipe.

In order to accomplish the above object, the invention provides an exhaust purification system having the features of the present claim 1.

Since there is provided the shield portion that extends from the portion located on the exhaust upstream side of the connection between the channel portion and the exhaust pipe towards the inside of the exhaust pipe located on the exhaust downstream side so as to draw away from the connection, the exhaust gas passing through the exhaust pipe is prevented by the shield portion from easily flowing into the channel portion via the connection.

Preferably, the channel portion and the exhaust pipe are connected to each other via a curved portion, and the shield portion extends from any one of the curved portion, near an end of the channel portion which is connected to the curved portion, and near an end of the exhaust pipe which is connected to the curved portion, towards the inside of the exhaust pipe on the exhaust downstream side.

The shield portion is provided to the connection between the exhaust pipe and the channel portion to be located near the curved portion, in which the exhaust gas passing through the exhaust pipe more easily flows into the channel portion, so that the exhaust gas is effectively prevented from flowing into the channel portion.

The channel portion is formed of a cylindrical member that is independent from the exhaust pipe, and a portion of an exhaust pipe-side end of the channel portion, which is located on the exhaust upstream side, projects more inwardly than an inner wall of the exhaust pipe.

Since the channel portion, through which the additive injected from the additive injection valve passes, is formed of the cylindrical member independent from the exhaust pipe, the end can be easily made to project more inwardly than the inner wall of the exhaust pipe by inserting the end of the channel portion into the exhaust pipe. Due to the configuration in which the exhaust upstream-side portion of the end of the channel portion projects more inwardly than the inner wall of the exhaust pipe, the exhaust gas passing through the exhaust pipe is prevented by the projecting portion from easily flowing into the channel portion.

Preferably, a portion of the exhaust pipe-side end of the channel portion, which is located on the exhaust downstream side, is arranged so as to project less than the inner wall of the exhaust pipe in the inward direction.

Since the exhaust downstream-side portion of the end of the channel portion is connected to the exhaust pipe, projecting less than the inner wall of the exhaust pipe in the inward direction, the exhaust gas does not easily remain at the connection between the end and the exhaust pipe in the exhaust downward-side portion. It is then possible to prevent the soot in exhaust gas from accumulating within and near the channel portion.

The channel portion is formed of a cylindrical member whose exhaust pipe-side end is cut at an angle relative to an axis of the channel portion, and an acutely-angled portion of the end is positioned on the exhaust upstream side.

Since the end of the channel portion is cut at an angle relative to the axis of the channel portion, if the acutely-angled portion is arranged on the exhaust upstream side, the channel portion can be easily installed so that the end thereof projects more on the exhaust upstream side and less on the exhaust downstream side.

The exhaust pipe has a bend portion; the channel portion outwardly diverges from an outer circumferential-side face of the bend portion in the exhaust pipe on the exhaust downstream side of the bend portion (13); and the end of the channel portion is positioned so as to avoid a path of an exhaust mainstream in the exhaust pipe.

Since the end of the channel portion is positioned off the path of the exhaust mainstream in the exhaust pipe, even if much of the exhaust gas flows to the outer circumferential side of the bend within the exhaust pipe due to a centrifugal force, the end of the channel portion does not interfere with the circulation of the exhaust mainstream. In result, a flow passage resistance of the exhaust gas in the exhaust pipe is suppressed, which discourages a reduction in internal combustion engine output.

Preferably, a flow passage section of a predetermined zone of the exhaust pipe on the exhaust upstream side of an additive injection flow injected from the additive injection valve is formed into a shape similar to an injection zone of the injection flow when a meeting point of the injection flow and the exhaust flow is viewed from the exhaust upstream side.

Since the flow passage section of the predetermined zone of the exhaust pipe on the exhaust upstream side of the additive injection flow injected from the additive injection valve is formed into the shape similar to the injection zone of the injection flow as viewed from the exhaust upstream side, the exhaust gas is evenly distributed on lateral sides of the injected additive, and there is a sufficient contact between the exhaust gas and the additive. This makes it possible to thoroughly mix the exhaust gas with the additive.

Preferably, the exhaust pipe is formed to maintain a fixed flow passage area in the predetermined zone on the exhaust upstream side of the connection with the channel portion.

Since the flow passage area of the exhaust pipe is fixed in the predetermined zone on the exhaust upstream side of the connection with the channel portion, that is, up to the meeting point of the exhaust gas and the additive, it is possible to suppress the flow passage resistance and prevent the reduction of the internal combustion engine output.

### BRIEF DESCRIPTION OF THE DRAWINGS

The present invention will become more fully understood from the detailed description given hereinafter and the accompanying drawings which are given by way of illustration only, and thus, are not limitative of the present invention, and wherein:
FIG. 1 is a schematic configuration view of an exhaust system for an engine according to an embodiment of the invention;
FIG. 2 is a longitudinal sectional view of a configuration of an exhaust pipe around a fuel-adding position;
FIG. 3 is an explanatory view showing the shape of a flow passage section of the exhaust pipe;
FIG. 4 is a longitudinal sectional view of a configuration of an exhaust pipe according to another embodiment of the invention; and
FIG. 5 is a longitudinal sectional view of a configuration of an exhaust pipe according to further another embodiment of the invention.

### DETAILED DESCRIPTION OF THE PREFERRED EMBODIMENTS

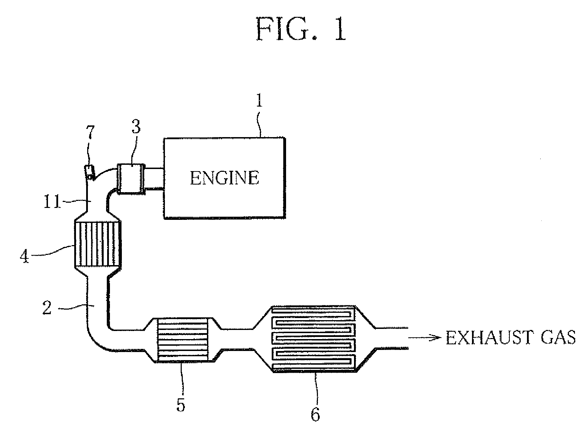

The present invention will be described with reference to an embodiment shown in FIG. 1.

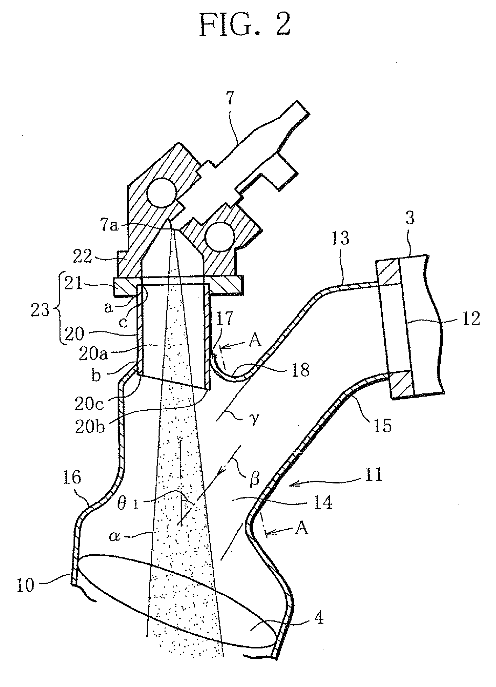

FIG. 1 is a schematic configuration view of an exhaust system for an engine according to an embodiment of the invention. FIG. 2 is a configuration view of the exhaust system around a fuel-adding position.

The present embodiment uses a diesel engine (engine 1) with a turbocharger as an internal combustion engine.

As shown in FIG. 1, an oxidation catalyst 4, a NOx storage catalyst 5 and a diesel particulate filter 6 are interposed as an exhaust purification system in an exhaust pipe 2 of the engine 1 in the order named from a turbocharger 3 (turbine) towards the exhaust downstream side. The oxidation catalyst 4 is formed by supporting catalytic noble metals, such as platinum (Pt), palladium (Pd) and rhodium (Rh), on a porous wall forming a channel. The oxidation catalyst 4 has a function of oxidizing CO and HC in exhaust gas to convert them into CO₂ and H₂O, and oxidizing NO in exhaust gas to produce NO₂.

The NOx storage catalyst 5 is formed, for example, by supporting a NOx storage agent, such as barium (Ba) and potassium (K), on a carrier added with noble metals, such as platinum (Pt) and palladium (Pd). The NOx storage catalyst 5 traps NOx under a lean air-fuel ratio atmosphere (oxidation atmosphere), and discharges the trapped NOx under a rich air-fuel ratio atmosphere (reduction atmosphere) to react the NOx with HC and CO in exhaust gas, thereby reducing the NOx.

The diesel particulate filter 6 has a function, for example, of alternately blocking the upstream and downstream sides of a channel of a honeycomb carrier with a plug, and collecting PM in exhaust gas. The diesel particulate filter 6 is formed by supporting catalytic noble metals, such as platinum (Pt), palladium (Pd) and rhodium (Rh), on a porous wall forming the channel.

An in-pipe fuel injection valve 7 (additive injection valve) is placed upstream from the oxidation catalyst 4. The in-pipe fuel injection valve 7 is supplied with fuel from a fuel tank (not shown) by a fuel pump (not shown) driven by the engine 1. The in-pipe fuel injection valve 7 has a function of injecting the supplied fuel into the exhaust pipe 2.

As shown in FIG. 2, the oxidation catalyst 4 is housed in a cylindrical housing 10. A cylindrical exhaust pipe portion 11 that is a part of the exhaust pipe 2 is formed on the exhaust upstream side of the housing 10. The exhaust pipe portion 11 connects the turbocharger 3 located thereabove to the oxidation catalyst 4 located therebelow. An upstream inlet 12 (connection with the turbocharger 3) of the exhaust pipe portion 11 faces sideways. A bend portion 13 is formed downstream of the inlet 12 of the exhaust pipe portion 11. The oxidation catalyst 4 is disposed beneath the bend portion 13.

The in-pipe fuel injection valve 7 is placed right above the oxidation catalyst 4 on an outer circumferential side of the bend portion 13 for the purpose of supplying the oxidation catalyst 4 with the fuel required for catalytic reaction. The in-pipe fuel injection valve 7 is provided at its end with a fuel injecting portion 7a that injects fuel. The in-pipe fuel injection valve 7 is fixed at the end of a cylindrical channel portion 20 diverging from an outer circumferential face of the exhaust pipe portion 11 and extending outwardly upward on the downstream side of the bend portion 13, by using a fixing flange 21 and a seat 22. The fuel injecting portion 7a located in the end of the in-pipe fuel injection valve 7 faces a fuel injection path 20a formed in an interior space of the channel portion 20.

The fuel injection path 20a is inclined relative to a bending direction of the bend portion 13 and extends upward in FIG. 2. An outlet end of the fuel injection path 20a is directed more to the inlet 12 than to the center of an inlet end face of the oxidation catalyst 4. The fuel for reaction of the oxidation catalyst 4, which injected from the in-pipe fuel injection valve 7, is thus headed to the oxidation catalyst 4 from a direction intersecting with an exhaust flow passing through the bend portion 13. To be specific, as shown in FIG. 2, the fuel is injected from a direction intersecting with a flowing direction of an exhaust flow β at an acute angle θ1 toward a downstream direction, that is, toward a mixing chamber 14 formed in front of the inlet end face of the oxidation catalyst 4. In this way, a downstream portion in which a spray penetration of an injection flow α is low collides with exhaust gas at a point immediately upstream from the oxidation catalyst 4.

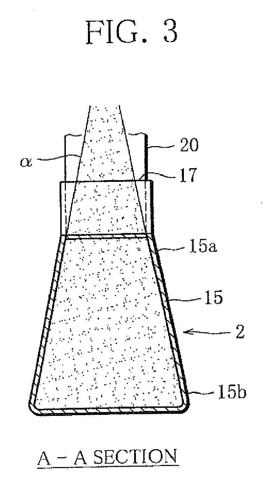

Of the exhaust pipe portion 11 located upstream from the oxidation catalyst 4, an exhaust guiding portion 15, which is a part of the exhaust pipe portion 11 located upstream from a point at which the exhaust pipe portion 11 intersects with the injection flow α of the fuel injected from the in-pipe fuel injection valve 7, has a flow passage section in a shape similar to an injection zone of the injection flow α as a point at which the injection flow α meets and intersects with the exhaust flow β is viewed from the side (exhaust upstream side), as shown in FIG. 3. More specifically, the flow passage section has a fan-like shape that is substantially the same as a downstream-side shape as the injection flow α is viewed from the side. The exhaust guiding portion 15 has a flow passage sectional shape that is narrow in a part corresponding to an upstream portion of the injection flow α, and is wide in an opposite part corresponding to a downstream portion, to coincide with the shape of the injection flow α splaying towards the end. Reference mark 15a in FIG. 3 represents a part having the narrow flow passage section, and 15b a part having the wide flow passage section. The exhaust guiding portion 15 evenly distributes the exhaust gas on the injection flow of the additive, and makes the additive fully contact the exhaust gas.

Flow passage area from the inlet 12 of the exhaust pipe portion 11 to a fuel mixing position is fixed at predetermined flow passage area. Needless to say, the sectional shape of the exhaust pipe portion 11 is gradually changed up to the exhaust guiding portion 15 into an identical shape to the shape of the injection flow α in order to avoid unnecessary channel resistance.

A part of the exhaust pipe portion 11 which is downstream from the exhaust guiding portion 15 is formed to splay in a radial direction. Due to this splayed portion 16, after colliding with each other, the fuel and the exhaust gas are splayed in the radial direction and simultaneously supplied to the inlet end face of the oxidation catalyst 4. As the shape of the splayed portion 16, not only a conical shape but a trumpet-like (bellmouth) shape is effective for evenly supplying the fuel and the exhaust gas to the oxidation catalyst 4.

The fuel injected from the in-pipe fuel injection valve 7 is used to produce a reducing agent resulting from the reaction of the oxidation catalyst 4 to reduce/remove the NOx and SOx stored in the NOx storage catalyst 5 by using this reducing agent, and to burn/remove the PM collected by the particulate filter 6 with the heat resulting from the reaction of the oxidation catalyst 4. For that reason, the in-pipe fuel injection valve 7 is so configured that fuel is injected when a controller for controlling the engine 1, for example, ECU (not shown), requires a catalytic reaction such as the reduction removal of NOx and SOx, and PM burning removal, during engine operation.

In particular, the present embodiment is characterized by the configuration of a part of the exhaust pipe portion 11, which is located near the position at which the fuel is added from the in-pipe fuel injection valve 7. As shown in FIG. 2, the channel portion 20 that introduces into the exhaust pipe portion 11 the fuel injected from the fuel injection valve 7 is not molded integrally with the exhaust pipe portion 11 but formed of a separate component. The lower end of the channel portion 20 is inserted in the exhaust pipe portion 11 and fixed by welding or the like. The lower end of the channel portion 20 is cut diagonally to the axis thereof. An acute-angled protruding end 20b (corresponding to the shield portion of the invention) is directed toward the inlet 12 (rightward direction as viewed in the drawing). The protruding end 20b of the channel portion 20 and the exhaust pipe portion 11 are connected to each other so that an angle created by their inner faces is acute. At the connection therebetween, a ridge end 17 of the exhaust pipe portion 11 is curved upwards to form a curved portion 18. The projecting portion 20b of the channel portion 20 protrudes from the ridge end 17 of the exhaust pipe portion 11 in a downward direction (inside the exhaust pipe portion 11). The protruding end 20b of the channel portion 20 does not protrude to an extended line ("γ" in the drawing) obtained by extending the inner wall face of the exhaust pipe portion 11 located on the exhaust upstream side of the exhaust guiding portion 15 towards the exhaust downstream side. In other words, the protruding end 20b does not protrude to the path of an exhaust mainstream. At an obtuse portion 20c located on an opposite side to the protruding end 20b across the axis of the channel portion 20, the channel portion 20 is arranged to smoothly continue to the inner wall face of the exhaust pipe portion 11. Accordingly, the obtuse portion 20c does not protrude inside the exhaust pipe portion 11. The channel portion 20 is so arranged that the lower end thereof (the end of the injection flow α) is retreated upwards as it moves away from a flowing direction of the exhaust flow β. In other words, the channel portion 20 is arranged so as to rise leftwards from the projecting portion 20b located at the right end in section as viewed in FIG. 2 to the obtuse portion 20c located at the left end in section as viewed in FIG. 2.

According to the present embodiment having the foregoing configuration, the exhaust gas discharged from the engine during operation passes through the turbocharger 3, the exhaust pipe portion 11, the oxidation catalyst 4, the NOx storage catalyst 4 and the particulate filter 6 to be discharged outside as shown in FIG. 1.

The NOx and SOx contained in the exhaust gas are stored in the NOx storage catalyst 5, and the PM is collected by the particulate filter 6.

When the stored NOx and SOx and the collected PM have to be removed, and a fuel addition valve 23 is activated, the fuel for removing the NOx, SOx and PM is injected from the fuel injecting portion 7a of the in-pipe fuel injection valve 7 through the fuel injection path 20a in a direction intersecting at an acute angle with the exhaust flow passing through the exhaust pipe portion 11. The fuel injected as the injection flow α and the exhaust gas flowing as the exhaust flown β thus collide with each other and join together.

The exhaust guiding portion 15 of the exhaust pipe portion 11 includes a downstream portion in which the penetration of the injection flow α is low, which has a flow passage section in substantially the same shape as the injection area as viewed from the exhaust upstream side. Accordingly, after passing through the exhaust guiding portion 15, the exhaust gas passes above the fuel injection flow α while being evenly distributed.

Consequently, the exhaust gas of the exhaust flow β and the fuel of the injection flow α come into a sufficient contact with each other. As a result of the thorough contact, the exhaust gas and the fuel are well mixed together.

At this point of time, the fuel of the injection flow α on the side close to the in-pipe fuel injection valve 7 (upstream side where the penetration is high) collides with and joins the exhaust gas flowing at a high flow rate, which has been increased in flow rate within the narrow flow-passage sectional part 15a. At the same time, the fuel of the injection flow α on the side far from the in-pipe fuel injection valve 7 (downstream side where the penetration is low) collides with the exhaust gas flowing at a low flow rate, which has been decreased in flow rate within the wide flow-passage sectional part 15b. As a consequence, the additive and the exhaust gas are more evenly mixed together. The fuel and the exhaust gas evenly mixed together, while being splayed in the radial direction by the splayed portion 16, head to the oxidation catalyst 4.

As shown in FIG. 2, the exhaust flow β and the injection flow α intersect with each other at the acute angle θ1 to prevent a deflection of the injection flow α, which is caused by the exhaust flow β. The mixed fuel and exhaust gas are therefore supplied to a predetermined position of the oxidation catalyst 4, for example, substantially the center of the inlet end face.

Accordingly, due to the constitution of the exhaust guiding portion 15, even if there is a long distance between the in-pipe fuel injection valve 7 and the oxidation catalyst 4, it is possible to supply the catalyst with the fuel that is evenly mixed with the exhaust gas.

In short, the exhaust guiding portion 15 enables the oxidation catalyst 4 to fully exert its functions. If the splayed portion 16 is also provided, it is possible to more evenly supply the fuel to the oxidation catalyst 4. Furthermore, since the exhaust guiding portion 15 is designed so that the predetermined flow passage area on the upstream side of the exhaust pipe portion 11 is fixed, the flow passage resistance of the exhaust pipe portion 11 is not increased, thereby preventing the reduction of engine output. According to the present embodiment, moreover, the end of the channel portion 20, through which the fuel passes after being injected from the in-pipe fuel injection valve 7, protrudes inside the exhaust pipe portion 11 more inwardly than the curved portion 18 to form the protruding end 20b (shield portion). The obtuse portion 20c is less protruding than the protruding end 20b in the upward direction so that the left side of the end of the channel portion 20 is lifted upwards as viewed in FIG. 2. This prevents the exhaust gas from easily flowing into the channel portion 20.

In the configuration shown in JP 2009-114910 A, where the exhaust pipe portion 11 and the channel portion 20 are integral to each other, since the exhaust pipe portion 11 and the channel portion 20 intersect with each other at an acute angle, the exhaust pipe portion 11 has to be curved in a part (curved portion 18) located therebetween. This causes the exhaust gas to easily flow from the exhaust pipe portion 11 into the channel portion 20. By contrast, in the present embodiment, the shield portion (protruding end 20b) for shielding the exhaust gas is formed by projecting the end of the channel portion 20 inside the exhaust pipe portion 11. By so doing, the exhaust gas is prevented from easily flowing into the channel portion 20.

The channel portion 20 and the exhaust pipe portion 11 are made by molding separate components and then combining them together, so that the shield portion (protruding end 20b) can be formed without difficulty by adjusting an insertion amount of the channel portion 20 into the exhaust pipe portion 11. The obtuse portion 20c located on the exhaust downstream side of the end of the channel portion 20 is connected smoothly to the inner face of the exhaust pipe portion 11, so that the retention of exhaust gas is unlikely to occur in this region. As mentioned above, according to the present embodiment, the exhaust gas is prevented from easily flowing into the channel portion 20 and remaining in the channel portion 20. This makes it possible to prevent a soot accumulation in the channel portion 20, thereby not hindering the fuel addition to the exhaust gas.

Furthermore, the protruding end 20b of the channel portion 20 is more externally located than the extended line γ of the inner wall of the exhaust guiding portion 15, which extends from the upstream side, or in other words, the protruding end 20b does not protrude to the path of the exhaust mainstream. For that reason, as compared to the configuration in which a guide portion (channel portion) protrudes to the center of the exhaust pipe, the flow passage resistance of the exhaust gas in the exhaust pipe 11 is decreased, and the output of the engine 1 is prevented from being reduced.

In the present embodiment, the channel portion 20 is not integral with the exhaust pipe portion 11, and the separate components are connected by welding. This facilitates the connection of the exhaust pipe portion 11 and the channel portion 20 to a flange 21 fitted with the in-pipe fuel injection valve 7. More specifically, the present embodiment first carries out the welding between the channel portion 20 and the flange 21 (shown by "a" in FIG. 2). Welding can be thus applied to the entire outer periphery of the connection without difficulty. Thereafter, a component 23 formed of the channel portion 20 and the flange 21 is welded to the exhaust pipe portion (shown by "b" in FIG. 2). In result, the entire outer periphery of the connection of the flange 21 is applied to welding, which eliminates the need for the welding of the inner periphery of the flange 21.

If the channel portion 20 and the exhaust pipe portion 11 are integrally molded as in JP 2009-114 310 A, it is difficult to weld the entire outer periphery at the time of welding the exhaust pipe portion 11 and the flange 21 because the upstream portion (bend portion 13 and the like) of the exhaust pipe portion 11 is in the way. On this account, welding has to be applied to the connection (shown by "c" in FIG. 2) located inside of the channel portion 20. There is the possibility that the welding part protrudes, and then that soot is accumulated. In the present embodiment, however, the welding does not need to be applied to the inner periphery as mentioned, and this prevents soot accumulation in the channel portion 20.

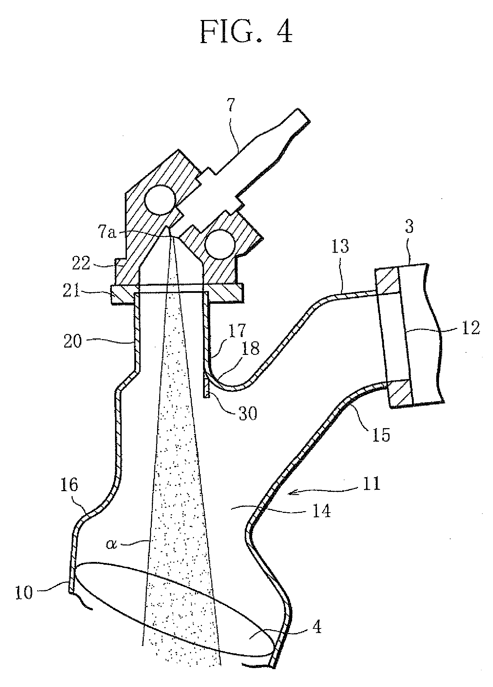

For example, although the exhaust pipe portion 11 and the channel portion 20 are separate bodies in the embodiment, they may be integral with each other. In this case, a collar-shaped shield portion 30 protruding into the exhaust pipe portion 11 may be provided at a position of the protruding end 20b of the channel portion 20 in the embodiment, as shown in FIG. 4. If there is the shield portion 30, the exhaust gas passing through the exhaust pipe portion 11 is interfered with by the shield portion 30, and is thus prevented from easily entering the channel portion 20. This prevents soot accumulation in the channel portion 20.

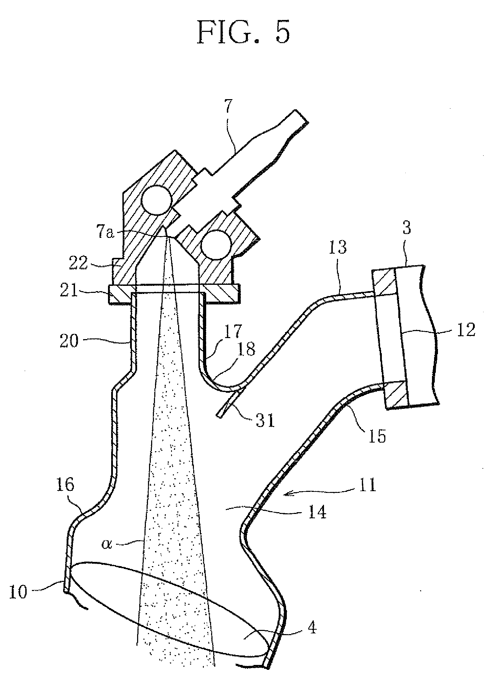

In FIG. 4, the shield portion 30 protrudes from the end 17 of the curved portion 18. As shown in FIG. 5, however, it is also possible to form a shield portion 31 so as to protrude from the exhaust pipe portion 11 to be located near a connecting position with respect to the curved portion 18. Alternatively, the shield portion 31 may be provided to the middle of the curved portion 18.

The embodiment shows an example in which the invention is applied to the exhaust purification system that uses the oxidation catalyst 4 as a catalyst located immediately downstream from the exhaust pipe portion 11 to which the additive is injected, and has the NOx storage catalyst 5 and the particulate filter 6 downstream from the oxidation catalyst 4. The invention is not limited to this system, and may be applied to an exhaust purification system that uses the NOx storage catalyst 5 as a catalyst located immediately downstream from the exhaust pipe portion 11, and has the in-pipe fuel injection valve 7 upstream from the NOx storage catalyst 5. The invention may also be applied to an exhaust purification system that uses the NOx storage catalyst 5 as a catalyst located immediately downstream from the exhaust pipe portion 11, has the NOx storage catalyst 5, the oxidation catalyst 4 and the particulate filter 6, and has the in-pipe fuel injection valve 7 upstream from the NOx storage catalyst 5, or an exhaust purification system that has the in-pipe fuel injection valve 7 upstream from a selective reduction catalyst and the particulate filter 6.

Moreover, although the embodiment uses the fuel as an additive to be added to exhaust gas, the additive may be any material as long as it is the one to be supplied to a catalyst. For example, the additive may be diesel oil, gasoline, ethanol, dimethyl ether, natural gas, propane gas, urea, ammonia, hydrogen, carbon monoxide, or the like, as a reducing agent. The additive may be material other than a reducing agent, and may be, for example, air, nitrogen, carbon dioxide and the like for refrigerating a catalyst, and air, ceria and the like for promoting the burning/removal of the soot collected in the particulate filter.

## Claims

1. An exhaust purification system comprising: an exhaust pipe (11) that directs an exhaust gas of an internal combustion engine (1) to the outside;
a catalyst (4) that is interposed in the exhaust pipe (11) ;
an additive injection valve (7) that is set on an exhaust upstream side of the catalyst (4) and injects an additive to be supplied to the catalyst (4); and
a channel portion (20) that is interposed between the additive injection valve (7) and the exhaust pipe (11), diverges outwardly from the exhaust pipe (11), and allows the additive injected from the additive injection valve (7) to pass inside, **characterized in that**
the exhaust pipe (11) has a bend portion (13),
the channel portion (20) diverges outwardly from the bend portion (13) in the exhaust pipe (11),
there is provided a shield portion (20b) that extends from a portion located on an exhaust upstream side of a connection between the channel portion (20) and the exhaust pipe (11) towards the inside of the exhaust pipe (11) located on an exhaust downstream side so as to draw away from the connection, the shield portion (20b) preventing the exhaust gas passing through the exhaust pipe (11) from flowing into the channel portion (20) via the connection,
the channel portion (20) is formed of a cylindrical member independent from the exhaust pipe (11) and has an exhaust pipe (11)-side end diagonally cut relative to an axis of the channel portion (20), an acutely-angled portion (20b) of the exhaust pipe-side end is positioned on the exhaust upstream side, and
the shield portion (20b) projects inwardly from an inner wall of the exhaust pipe (11) such that the shield portion (20b) of the exhaust pipe (11)-side end of the channel portion (20), which is located on the exhaust upstream side, is positioned outwardly from a path of an exhaust mainstream in the exhaust pipe (11).

2. The exhaust purification system according to claim 1, **characterized in that**
the channel portion (20) and the exhaust pipe (11) are connected to each other via a curved portion (18).

3. The exhaust purification system according to claim 1 or 2, **characterized in that** a portion (20c) of the exhaust pipe (11)-side end of the channel portion (20), which is located on the exhaust downstream side, is arranged so as to project less than the inner wall of the exhaust pipe (11) in the inward direction.

4. The exhaust purification system according to any one of claims 1 to 3, **characterized in that** a flow passage section of a predetermined zone of the exhaust pipe (11) on the exhaust upstream side of an additive injection flow injected from the additive injection valve (7). is formed into a shape similar to an injection zone of the injection flow when a meeting point of the injection flow and the exhaust flow is viewed from the exhaust upstream side.

5. The exhaust purification system according to any one of claims 1 to 4, **characterized in that** the exhaust pipe (11) has a fixed flow passage area in a predetermined zone thereof located on the exhaust upstream side of the connection with the channel portion (20) such that the fixed flow passage area remains unchanged through the predetermined zone to the connection with the channel portion.

## Patentansprüche

1. Abgasreinigungssystem, das aufweist:
ein Abgasrohr (11), das ein Abgas eines Verbrennungsmotors (1) nach außen leitet; einen Katalysator (4), der im Abgasrohr (11) eingefügt ist;
ein Additiveinspritzventil (7), das auf einer Abgas-Stromaufwärtsseite des Katalysators (4) platziert ist und ein Additiv einspritzt, das dem Katalysator (4) zuzuführen ist; und
einen Kanalabschnitt (20), der zwischen dem Additiveinspritzventil (7) und dem Abgasrohr (11) eingefügt ist, vom Abgasrohr (11) nach außen divergiert und ermöglicht, dass das aus dem Additiveinspritzventil (7) eingespritzte Additiv im Inneren durchläuft, **dadurch gekennzeichnet, dass**
das Abgasrohr (11) einen Biegungsabschnitt (13) hat,
der Kanalabschnitt (20) vom Biegungsabschnitt (13) im Abgasrohr (11) nach außen divergiert,
ein Abschirmabschnitt (20b) vorgesehen ist, der sich von einem Abschnitt, der auf einer Abgas-Stromaufwärtsseite einer Verbindung zwischen dem Kanalabschnitt (20) und dem Abgasrohr (11) liegt, zum Inneren des Abgasrohrs (11), das auf einer Abgas-Stromabwärtsseite liegt, so erstreckt, dass er sich von der Verbindung entfernt, wobei der Abschirmabschnitt (20b) das das Abgasrohr (11) durchlaufende Abgas daran hindert, über die Verbindung in den Kanalabschnitt (20) zu strömen, der Kanalabschnitt (20) aus einem zylindrischen Bauteil unabhängig vom Abgasrohr (11) gebildet ist und ein abgasrohr- (11) seitiges Ende hat, das relativ zu einer Achse des Kanalabschnitts (20) diagonal beschnitten ist, ein spitzwinkliger Abschnitt (20b) des abgasrohrseitigen Endes auf der Abgas-Stromaufwärtsseite positioniert ist, und
der Abschirmabschnitt (20b) von einer Innenwand des Abgasrohrs (11) nach innen vorsteht, so dass der Abschirmabschnitt (20b) des abgasrohr- (11) seitigen Endes des Kanalabschnitts, der auf der Abgas-Stromaufwärtsseite liegt, von einem Weg eines Abgashauptstroms im Abgasrohr (11) nach außen positioniert ist.

2. Abgasreinigungssystem nach Anspruch 1, **dadurch gekennzeichnet, dass** der Kanalabschnitt (20) und das Abgasrohr (11) über einen gekrümmten Abschnitt (18) miteinander verbunden sind.

3. Abgasreinigungssystem nach Anspruch 1 oder 2, **dadurch gekennzeichnet, dass** ein Abschnitt (20c) des abgasrohr- (11) seitigen Endes des Kanalabschnitts (20), der auf der Abgas-Stromabwärtsseite liegt, so angeordnet ist, dass er weniger als die Innenwand des Abgasrohrs (11) in Einwärtsrichtung vorsteht.

4. Abgasreinigungssystem nach einem der Ansprüche 1 bis 3, **dadurch gekennzeichnet, dass** ein Strömungsdurchgangsteilstück einer vorbestimmten Zone des Abgasrohrs (11) auf der Abgas-Stromaufwärtsseite einer Additiveinspritzströmung, die aus dem Additiveinspritzventil (7) eingespritzt wird, in eine Form gebracht ist, die einer Einspritzzone der Einspritzströmung ähnelt, betrachtet man einen Zusammenfluss der Einspritzströmung und der Abgasströmung von der Abgas-Stromaufwärtsseite.

5. Abgasreinigungssystem nach einem der Ansprüche 1 bis 4, **dadurch gekennzeichnet, dass** das Abgasrohr (11) eine feste Strömungsdurchgangsfläche in einer vorbestimmten Zone davon hat, die auf der Abgas-Stromaufwärtsseite der Verbindung mit dem Kanalabschnitt (20) liegt, so dass die feste Strömungsdurchgangsfläche über die vorbestimmte Zone bis zur Verbindung mit dem Kanalabschnitt unverändert bleibt.

## Revendications

1. Système de purification d'échappement comprenant :
un tuyau d'échappement (11) qui dirige un gaz d'échappement d'un moteur à combustion interne (1) vers l'extérieur ;
un catalyseur (4) qui est intercalé dans le tuyau d'échappement (11) ;
une soupape d'injection d'additif (7) qui est montée sur un côté amont d'échappement du catalyseur (4) et injecte un additif à alimenter vers le catalyseur (4) ; et
une partie de canal (20) qui est intercalée entre la soupape d'injection d'additif (7) et le tuyau d'échappement (11), diverge vers l'extérieur depuis le tuyau d'échappement (11), et permet à l'additif injecté depuis la soupape d'injection d'additif (7) de passer à l'intérieur, **caractérisé en ce que**
le tuyau d'échappement (11) comporte une partie courbée (13),
la partie de canal (20) diverge vers l'extérieur depuis la partie courbée (13) dans le tuyau d'échappement (11),
il est fourni une partie de protection (20b) qui s'étend depuis une partie située sur un côté amont d'échappement d'une liaison entre la partie de canal (20) et le tuyau d'échappement (11) vers l'intérieur du tuyau d'échappement (11) situé sur un côté aval d'échappement de façon à s'écarter de la liaison, la partie de protection (20b) empêchant le gaz d'échappement passant à travers le tuyau d'échappement (11) de s'écouler dans la partie de canal (20) via la liaison,
la partie de canal (20) est formée d'un élément cylindrique indépendant du tuyau d'échappement (11) et comporte une extrémité côté tuyau d'échappement (11) coupée diagonalement relativement à un axe de la partie de canal (20), une partie à angle aigu (20b) de l'extrémité côté tuyau d'échappement est positionnée sur le côté amont d'échappement, et
la partie de protection (20b) fait saillie vers l'intérieur depuis une paroi intérieure du tuyau d'échappement (11) de telle manière que la partie de protection (20b) de l'extrémité côté tuyau d'échappement (11) de la partie de canal (20), qui est située sur le côté amont d'échappement, est positionnée vers l'extérieur par rapport à un chemin d'un courant principal d'échappement dans le tuyau d'échappement (11).

2. Système de purification d'échappement selon la revendication 1, **caractérisé en ce que**
la partie de canal (20) et le tuyau d'échappement (11) sont reliés ensemble via une partie courbée (18).

3. Système de purification d'échappement selon la revendication 1 ou 2, **caractérisé en ce qu'**une partie (20c) de l'extrémité côté tuyau d'échappement (11) de la partie de canal (20), qui est située sur le côté aval d'échappement, est agencée de façon à faire saillie moins que la paroi intérieure du tuyau d'échappement (11) dans la direction vers l'intérieur.

4. Système de purification d'échappement selon l'une quelconque des revendications 1 à 3, **caractérisé en ce qu'**une section de passage d'écoulement d'une zone prédéterminée du tuyau d'échappement (11) sur le côté amont d'échappement d'un flux d'injection d'additif injecté depuis la soupape d'injection d'additif (7) est formée en une forme similaire à une zone d'injection du flux d'injection quand un point de rencontre du flux d'injection et du flux d'échappement est vu depuis le côté amont d'échappement.

5. Système de purification d'échappement selon l'une quelconque des revendications 1 à 4, **caractérisé en ce que** le tuyau d'échappement (11) a une aire de passage d'écoulement fixe dans une zone prédéterminée située sur le côté amont d'échappement de la liaison avec la partie de canal (20) de telle manière que l'aire de passage d'écoulement fixe reste inchangée à travers la zone prédéterminée jusqu'à la liaison avec la partie de canal.
